## Europäisches Patentamt
## European Patent Office
## Office européen des brevets

(19)

(11) Numéro de publication: **0 171 341**
**B1**

(12) **FASCICULE DE BREVET EUROPEEN**

(45) Date de publication du fascicule du brevet: **04.04.90**

(51) Int. Cl.⁵: **A 01 D 34/66**

(21) Numéro de dépôt: **85440047.0**

(22) Date de dépôt: **05.07.85**

(60) **Demande divisionnaire 88110204 déposée le 27.06.88.**

(54) **Faucheuse rotative.**

(30) Priorité: **06.07.84 FR 8410916**

(43) Date de publication de la demande:
**12.02.86 Bulletin 86/07**

(45) Mention de la délivrance du brevet:
**04.04.90 Bulletin 90/14**

(84) Etats contractants désignés:
**AT BE DE GB IT NL SE**

(56) Documents cités:
**EP-A-0 065 809**
**EP-A-0 070 585**
**EP-A-0 084 293**
**FR-A-2 351 580**
**FR-A-2 355 202**
**FR-A-2 372 989**
**GB-A-2 059 236**
**US-A-1 536 514**
**US-A-3 974 630**

(73) Titulaire: **KUHN S.A.**
**4, Impasse des Fabriques**
**F-67700 Saverne (FR)**

(72) Inventeur: **Ermacora, Rino**
**5 Rue de Monswiller Ottersthal**
**F-67700 Saverne (FR)**
Inventeur: **Neuerburg, Horst**
**2a Grand'Rue Haegen**
**F-67700 Saverne (FR)**

Courier Press, Leamington Spa, England.

EP 0 171 341 B1

## Description

La présente invention concerne une faucheuse comportant des organes de coupe rotatifs s'étendant au-dessus d'un carter et munis d'au moins un outil de coupe, lesdits organes de coupe ayant des trajectoires sécantes et une partie au moins desdits organes de coupe rotatifs étant entraînée par des moyens de transmission logés dans le carter que comporte des boîtiers dans lesquels sont guidés en rotation cette partie d'organes de coupe rotatifs et des éléments entretoises dont chacun détermine la distance entre deux boîtiers voisins, lesdits boîtiers et lesdits éléments entretoises s'étendant au moins sensiblement dans le prolongement l'un de l'autre suivant la direction longitudinale du carter et étant liés entre eux par des organes d'assemblage s'étendant au moins sensiblement parallèlement à la direction longitudinale du carter et, en vue de dessus, au moins sensiblement sous les organes de coupe rotatifs, une partie desdits organes d'assemblage s'étendant à l'avant du carter et une partie desdits organes d'assemblage s'étendant à l'arrière dudit carter.

Une telle faucheuse est décrite dans la GB—A—2 059 236. Cette faucheuse conneu comporte en effet un châssis permettant de l'atteler à un tracteur et une barre de coupe liée de manière articulée à ce châssis. La barre de coupe est notamment formée par un carter qui support des organes de coupe rotatifs ainsi que des organes d'entraînement logés dans le carter et destinés à l'entraînement en rotation desdits organes de coupe rotatifs. Ce carter est formé, entre autre, par des modules supportant chacun deux organes de coupe rotatifs qui tournent en sens inverse. A cet effet, chaque module est formé par deux boîtiers et un élément entretoise déterminant la distance entre ces deux boîtiers. Ledit élément entretoise et les deux boîtiers correspondants forment une seule pièce. Les modules ainsi formés sont enfilés sur deux tirants et sont serrés les uns contre les autres par des écrous vissés sur les extrémités filetées desdits tirants.

Cette faucheuse connue comporte plusieurs inconvénients. Un premier inconvénient réside en effet dans le fait que chaque module comporte deux organes de coupe rotatifs. De cette sorte, il n'est pas posible de générer une gamme de faucheuses de largeurs de travail bien échelonnées comme le souhaite le marché, étant donné que la valeur de l'incrément est trop importante.

Un deuxième inconvénient de cette faucheuse connue réside dans le fait que le tirant agencé à la partie frontale du carter gène le bon déroulement de l'opération de coupe. Il apparaît en effet que celui-ci réduit considérablement la surface de ce que l'on appelle en pratique "le triangle de surcoupe", c'est-à-dire la surface commune balayée par deux organes de coupe rotatifs adjacents et s'étendant entre le point d'intersection avant des trajectories extrêmes décrites par les organes de coupe lors de leur rotation et le bord frontal du carter. De cette sorte, de la terre véhiculée par les outils de coupe lorsque ceux-ci rencontrent une taupinière, par exemple, et mélangée avec des fins débris végétaux, qui se colle à cet endroit, peut très rapidement former une accumulation qui s'étendra au-delà du point d'intersection avant des trajectoires extêmes décrites par les outils de coupe. Cette accumulation repoussera alors le produit qui se présente à cet endroit et qui ne pourra, de ce fait, pas être coupé par les outils de coupe, ce qui n'est pas souhaitable.

Mais cette accumulation peut également gèner le bon écoulement du produit coupé vers l'arrière, ce qui n'est pas non plus souhaitable, étant donné que cela conduit à un bourrage de la faucheuse.

Du reste il convient de noter que cette tendance à la formation d'accumulations et cette tendance au bourrage sont encore accentuées par le fait qu'un certain espace existe entre le tirant frontal et le bord avant du carter, dans lequel peuvent s'accrocher des brins de produit coupé.

Un troisième inconvénient de cette faucheuse connue réside dans le fait qu'en cas de démontage pour changer un module défectueux, on défait automatiquement la liaison entre tous lesdits modules. Si, en sus, c'est un module éloigné des écrous vissés sur l'extrémité des tirants qui doit être changé, il faut enlever tous les modules s'étendant entre le module à changer et l'extrémité des tirants où sont vissés lesdits écrous. Ces différents modules se présentant donc en vrac et risquent d'être souillés s'ils sont déposés tel quel sur le sol. Ceci nécessite alors avant remontage un nettoyage très minutieux des différentes pièces qui ont été souillées et notamment des différentes faces d'appui entre modules. Si on ne prend pas cette précaution, on n'obtiendra plus de précontrainte suffisante dans les tirants lors du serrage des écrous sur lesdits tirants. Ceci confère alors au carter une rigidité insuffisante. La conséquence de ce manque de rigidité se traduira par un matage des différentes faces d'appui des modules qui entraînera la mise hors d'usage de ces modules.

La présente invention a pour objectif de remédier à ces inconvénients.

A cet effet, la faucheuse selon la présente invention est caractérisée par le fait que le carter comporte des modules chacun formé par un seul boîtier et un seul élément entretoise en une seule pièce, ledit élément entretoise étant situé d'un seul et même côté du boîtier correspondant, que chaque module est muni à chacune de ses extrémités d'une bride et que les organes d'assemblage comportent un certain nombre de boulons associés à une paire de modules adjacents, lesdits boulons traversant exclusivement les brides adjacentes de ladite paire de modules adjcents.

Le fait que les modules de la faucheuse selon l'invention ne comportant qu'un seul boîtier et un seul élément entretoise permet tout d'abord la génération d'une gamme de faucheuses de largeurs de coupe bien échelonnées.

Comme du reste, l'élément entretoise d'un module est situé d'un seul et même côté du boîtier correspondant et que les organes d'assemblage comportent un certain nombre de boulons associés à une paire de modules adjacents, qui traversent uniquement les brides adjacentes de ladite paire de modules adjacents, la faucheuse selon la présente invention est moins vulnérable aux bourrages. La jonction entre deux modules adjacents se fait en effet sous un des organes de coupe rotatifs guidés dans ladite paire de modules, de telle sorte que les boulons ne peuvent ni réduire la dimension du "triangle de surcoupe", ni gêner le bon écoulement du produit coupé.

Cette caractéristique présente enfin encore l'avantage que lors d'un remplacement d'un module défectueux il sera uniquement nécessaire de desserrer les boulons qui lient ce module aux deux modules adjacents sans toucher aux boulons qui lient les autres modules entre eux.

Selon une caractéristique supplémentaire, le boîtier d'un module comporte un cylindre de palier d'axe dirigé vers le haut, qui fait partie intégrante du module. On évite ainsi la création d'un assemblage entre le cylindre de palier et le reste du module. Ceci permet d'abaisser le prix de revient du module car on supprime des usinages sur le cylindre de palier et le reste du module, ainsi que les organes de liaison qu'aurait nécessité un tel assemblage.

Avantageusement, l'aux du cylindre de palier est situé près du bord avant du module. De ce fait, en vue de dessus, la surface commune balayée par les outils de coupe de deux organes de coupe rotatifs voisins s'étend loin au-devant du bord avant du module.

Selon une caractéristique supplémentaire, deux modules voisins sont contrés l'un par rapport à l'autre. Cet agencement permet de faire absorber aux moyens de centrage une partie des efforts de flexion qui s'exercent sur la barre de coupe. D'autre part, on évite que les organes d'assemblage qui lient deux modules voisins l'un à l'autre ne soient trop sollicités au cisaillement.

Selon une caractéristique supplémentaire, afin que le carter soit dans la plupart des conditions rencontrées vraiment peu sensible aux bourrages provoqués par des accumulations de terre qui se collent à son bord frontal, notamment dans la zone au-dessus de laquelle passent les outils de coupe pendant leur rotation, une partie au moins de la face inférieure de l'élément entretoise est située à une certaine distance du sol. En effet, avec cette caractéristique, on permet à la terre et/ou aux débris végétaux qui autrement s'accumuleraient à l'avant du carter, de passer sous le carter.

Selon une caractéristique supplémentaire de l'invention, afin d'offrir la plus petite surface possible à laquelle la terre et/ou les débris végétaux pourraient se coller, le bord avant de l'élément entretoise est, sur une partie au moins de sa longueur, relativement pointu.

Pour permettre à la terre et/ou aux débris végétaux de bien glisser vers le passage existant entre le sol et la face inférieure de l'élément entretoise, le bord avant de l'élément entretoise présente sur une partie au moins de sa longueur, un plan incliné dirigé vers l'arrière et vers le bas.

Selon une caractéristique supplémentaire, le bord avant de l'élément entretoise présente, au moins dans la zone au-dessus de laquelle passent les outils de coupe pendant leur rotation, un plan incliné dirigé vers l'arrière et vers le haut. Cette caractéristique permet de limiter les dégâts au niveau des moyens de transmission par exemple, que peut causer le choc d'un outil de coupe déformé vers le bas lorsqu'il rencontre le bord avant du carter. En effet, avec l'agencement d'un plan incliné dirigé vers l'arrière et vers le haut, l'intensité d'un tel choc peut être atténuée. En sus, il est possible, grâce au plan incliné, de redresser en partie au moins un outil de coupe déformé vers le bas.

Pour permettre au carter de résister notamment aux chocs occasionnés par la frappe d'un outil déformé vers le bas sur ledit carter, le bord avant de l'élément entretoise présente, au moins dans sa partie supérieure et au moins dans la zone au-dessus de laquelle passent les outils de coupe pendant leur rotation, une épaisseur de matière plus importante.

Lorsqu'un outil de coupe plié vers le bas n'a pu être entièrement redressé, il peut alors frapper le bord arrière du module adjacent dans la zone au-dessus de laquelle il passe lors de sa rotation. Pour atténuer également dans ce cas le choc, le bord arrière de l'élément entretoise possède au moins dans la zone au-dessus de laquelle l'outil de coupe passe lors de sa rotation un plan incliné dirigé vers l'avant et vers le haut.

De même, comme précédemment, pour le bord avant, l'épaisseur de matière dans cette zone est également plus importante. Cette épaisseur plus importante de matière est au moins agencée dans la partie supérieure du bord arrière de l'élément entretoise.

Selon une caractéristique supplémentaire, la surface extérieure du cylindre de palier comporte une première zone de révolution d'un certain diamètre qui collabore avec une partie de l'organe de coupe rotatif correspondant, tel qu'un alésage par exemple, en vue de former une chicane, et une deuxième zone de révolution d'un diamètre plus petit que le diamètre de la première zone de révolution. Avec cette caractéristique, on diminue substantiellement le risque d'enroulement et d'introduction de brins de fourrage ou d'objets filiformes quelconques qui peuvent traîner dans le champ sur lequel opère la faucheuse, tels que des ficelles par exemple. L'enroulement et l'introduction de tels objets peut en effet occasionner des dégâts importants aux paliers qui guident en rotation l'arbre de l'organe de coupe rotatif.

Selon une réalisation préférée, la longueur de la deuxième zone de révolution est relativement grande.

Selon une réalisation préférée supplémentaire, la surface inférieure de l'organe de coupe qui délimite le bas de la partie de l'organe de coupe formant une chicane avec la première zone du cylindre de palier, s'étend sensiblement dans le voisinage de la frontière entre la première et deuxième zone du cylindre de palier, et de préférence légèrement plus haut que ladite frontière. Avantageusement également, ladite surface inférieure s'étend depuis le voisinage de ladite frontière vers l'extérieur et vers le haut.

Selon une caractéristique supplémentaire, l'arbre d'un organe de coupe rotatif est guidé en rotation dans un palier logé dans l'alésage d'un cylindre de palier dont est muni le boîtier supportant ledit organe de coupe rotatif, les plus petit diamètre de l'alésage du cylindre de palier étant supérieur au diamètre extérieur du moyen de transmission fixé sur l'arbre, de telle sorte que l'ensemble prémonté arbre-moyen de transmission-palier puisse être monté dans l'alésage du cylindre de palier et démonté dudit alésage. Il est donc notamment possible de faire des interventions très rapides au niveau d'un boîtier lorsque par exemple le palier correspondant devenait défectueux, sans qu'il ne soit pour celà nécessaire de démonter le carter. Cette caractéristique particulière fait l'objet de la demande divisionnaire, EP—A—0304584.

Selon une caractéristique supplémentaire, le montage comporte des moyens qui permettent un réglage sensiblement continu du jeu de fonctionnement des moyens de transmission tels que couples de roues dentées par exemple. Avec cette caractéristique, il est possible sans augmenter les coûts de montage, de régler de manière précise le jeu de fonctionnement des moyens de transmission. Un réglage précis de ce jeu de fonctionnement entraîne notamment une durée de vie plus importante des moyens de transmission et un abaissement du niveau sonore lors du fonctionnement de la faucheuse.

Selon une forme de réalisation, les moyens qui permettent ce réglage sont constitués par au moins un organe que l'on déforme lors du montage du palier dans le cylindre de palier.

Selon une autre forme de réalisation, c'est le palier qui comporte sur sa surface extérieure une partie au moins qui est filetée, et qui collabore avec une partie filetée de l'alésage du cylindre de palier. Cette dernière forme de réalisation permet d'avoir une plage importante de réglage. Le règlage est d'autant plus fin que le pas du filetage est fin.

Avantageusement, la surface extérieure du palier comporte une partie non filetée qui se centre dans une partie non filetée du cylindre de palier. Cette disposition permet d'avoir un bon centrage de l'arbre de l'organe de coupe rotatif dans le cylindre de palier.

Selon une réalisation préférée, les parties non filetées du palier et du cylindre de palier coopèrent avant que les parties filetées dudit palier et dudit cylindre de palier ne commencent à être en prise. Cet agencement permet de visser aisément le palier dans le cylindre de palier.

En effet, comme le palier est déjà centré dans le cylindre de palier avant le vissage, tout tâtonnement, pour amener la partie filetée du palier et celle du cylindre de palier en face l'une de l'autre pour que le vissage puisse effectivement être entrepris, est éliminé.

Par ailleurs, les parties filetées du palier et du cylindre de palier sont agencées de telle manière qu'elles ne peuvent pas être amenées en prise l'une avec l'autre lorsque, au cours du montage, les moyens de transmission tels que le couple de roues dentées par exemple, ne sont pas en prise. Cette caractéristique est très avantageuse au niveau du montage. En effet, elle permet l'emploi de machines visseuses sans risquer de bloquer le palier dans le cylindre de palier alors que les moyens de transmission ne sont pas en prise. Cette caractéristique réduit donc les aléas au montage et corrélativement également les coûts de montage.

Selon une caractéristique supplémentaire, après montage du palier dans le cylindre de palier, des moyens condamnent la rotation relative entre ledit palier et ledit cylindre de palier.

Ces moyens sont particulièrement efficaces lorsqu'ils sont constitués par au moins un organe du palier qui collabore avec un organe du cylindre de palier.

Avantageusement ces organes sont amenés en collaboration par déformation de l'un et/ou de l'autre.

Cet agencement permet notamment de maintenir précisément le jeu de fonctionnement des moyens de transmission sans entraîner des coûts de montage élevés.

Selon une caractéristique supplémentaire, le palier est muni de moyens de prise qui permettent son vissage et son dévissage.

Suivant une forme de réalisation, ces moyens sont constitués par au moins un creux aménagé dans la face supérieure du palier. Il est ainsi possible de pouvoir démonter le palier avec un outil de frappe tel qu'un marteau, sans risquer de casser lesdits moyens de prise.

Suivant une autre forme de réalisation, les moyens de prise sont constitués par une partie centrale qui émerge à la face supérieure du palier et qui a une surface extérieure non circulaire et de préférence polygonale.

Selon une caractéristique supplémentaire, des moyens d'étanchéité empêchent les fuites de lubrifiant entre le palier et le cylindre de palier.

D'autres caractéristiques de la faucheuse selon l'invention sont contenues dans les autres sous-revendications et apparaîtront ci-après plus en détail dans la description suivante d'une forme de réalisation non limitative faite en référence au dessin annexé sur lequel:

La figure 1 représente une vue de dessus de la barre de coupe de la faucheuse selon l'invention.

La figure 2 représente une vue arrière en coupe partielle selon le plan II—II défini sur la figure 1.

La figure 3 représente une vue de dessus à une échelle agrandie de la barre de coupe sans disques.

La figure 4 représente une vue latérale en coupe selon le plan IV—IV défini sur la figure 3.

La figure 5 représente une vue arrière partiellement en coupe des extrémités de la barre de coupe.

La figure 6 représente la méthode de formation d'un épaulement pour maintenir le roulement d'un disque dans la boîte à roulement.

La figure 7 représente une autre formé de réalisation du palier qui guide en rotation un disque.

La figure 8 représente une vue en coupe d'une autre forme de réalisation d'une boîte à roulement.

La figure 9 représente une vue de dessus de la boîte à roulement de la figure 8.

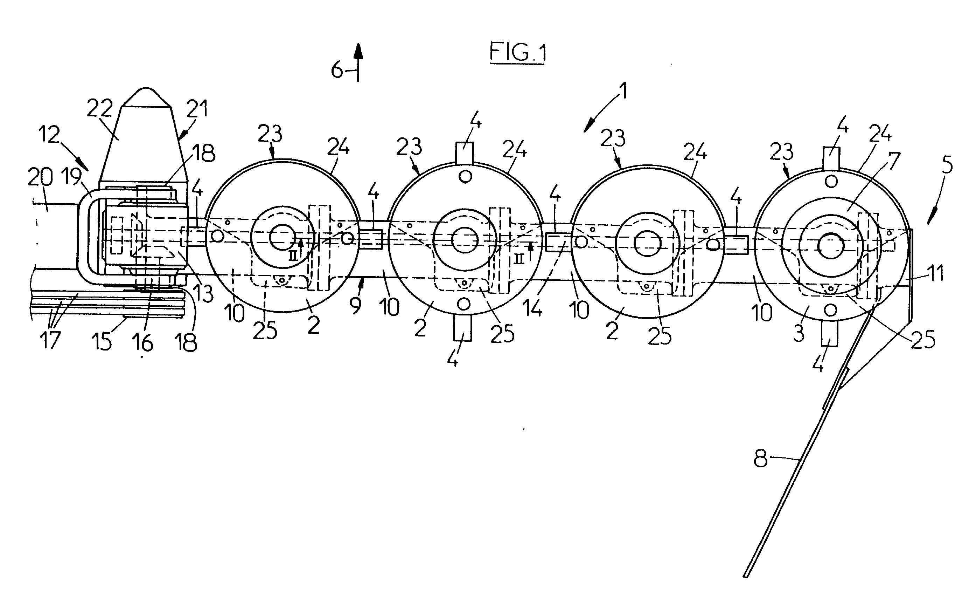

Sur la figure 1, est représentée une faucheuse ou plus précisément la barre de coupe (1) d'une faucheuse. Cette barre de coupe (1) comporte quatre disques (2, 3) tournant chacun autour d'un axe dirigé vers le haut. Chaque disque (2, 3) est muni de deux outils de coupe (4) qui sont montés diamétralement opposés sur la bordure extérieure du disque. De préférence, le montage des outils de coupe (4) sur les disques (2, 3) est réalisé de sorte que lesdits outils de coupe (4) s'étendent vers l'extérieur sous l'effet de la force centrifuge, et qu'ils puissent pivoter vers l'arrière lorsqu'ils recontrent un obstacle lors de leur rotation. Le disque (3) situé à l'extrémité droite (5) de la barre de coupe (1), vue dans le sens de travail défini par la flèche (6), est surmonté d'une coiffe (7). Cette coiffe (7) collabore avec un dispositif de réduction de l'andain de fourrage coupé tel que la planche à andains (8) par exemple, de sorte que l'andain de fourrage coupé soit séparé du fourrage encore sur pied.

Les disques (2, 3) sont guidés en rotation dans un carter (9) disposé sous lesdits disques. Ce carter (9), tel qu'il sera expliqué plus loin plus en détail est formé par une succession de modules (10). A l'extrémité droite (5) de la barre de coupe (1), le carter (9) est muni d'un module d'extrémité (11) qui s'étend sensiblement jusqu'à la trajectoire extérieure décrite par le disque (3), ou légèrement au-delà de ladite trajectoire. A l'extrémité gauche (12), le carter (9) est muni d'un carter de renvoi (13).

Dans le carter (9) sont logés des moyens de transmission tels qu'un arbre de transmission (14) qui collabore avec des roues dentées par exemple, en vue d'entraîner en rotation les disques (2, 3). L'entraînement en rotation de ces moyens de transmission est réalisé par l'intermédiaire d'un mécanisme d'entraînement logé dans le carter de renvoi (13) et qui sera décrit ultérieurement plus en détail. Ce méanisme d'entraînement reçoit le mouvement d'une poulie (15) calée sur l'axe (16). La pouile (15) est entraînée en rotation au moyen d'une autre poulie non représentée par l'intermédiaire de courroies (17). Cette autre poulie est, d'une manière connue de l'homme de l'art, entraînée par la prise de force d'un tracteur non représenté auquel est attelée la faucheuse, par l'intermédiaire d'un arbre à joints universels non représenté.

Le carter de renvoi (13) comporte deux portées cylindriques (18) sensiblement concentriques avec l'axe (16) d'entrée dudit carter de renvoi (13). Ces portées cylindriques (18) supportent une chape (19) fixée à un châssis (20) par l'intermédiaire duquel la faucheuse est attelée au tracteur. Avec cet agencement, la barre de coupe (1) peut suivre les dénivellations du sol en pivotant autour de l'axe des portées cylindriques (18) sans que les divers organes d'entraînement ne soient soumis à des contraintes supplémentaires. Par ailleurs, il est possible de pivoter la barre de coupe (1) dans une position sensiblement verticale pour réduire la largeur de la faucheuse au transport.

A l'extrémité (12) du carter (9) et sous celui-ci ou plus précisément sous le carter de renvoi (13), est agencé un sabot (21) qui a une partie avant (22) relevée comme l'avant d'un ski. Ce sabot (21) permet à la faucheuse de glisser sur le sol et d'éviter les accrochages de fourrage coupé au carter de renvoi (13).

A l'avant, sous chaque disque (2, 3), le carter (9) est muni de patins protecteurs de disque (23). Ces patins protecteurs de disque comportent une partie frontale (24) présentant en vue de dessus une forme sensiblement circulaire dont le rayon est plus grand que le rayon de la trajectoire extrême des disques (2, 3) mais plus petit que le rayon de la trajectoire extrême des outils de coupe (4). Par ailleurs, lesdits patins protecteurs de disque (23) comportent une partie arrière (25) en forme de patin, sur laquelle repose également la barre de coupe (1).

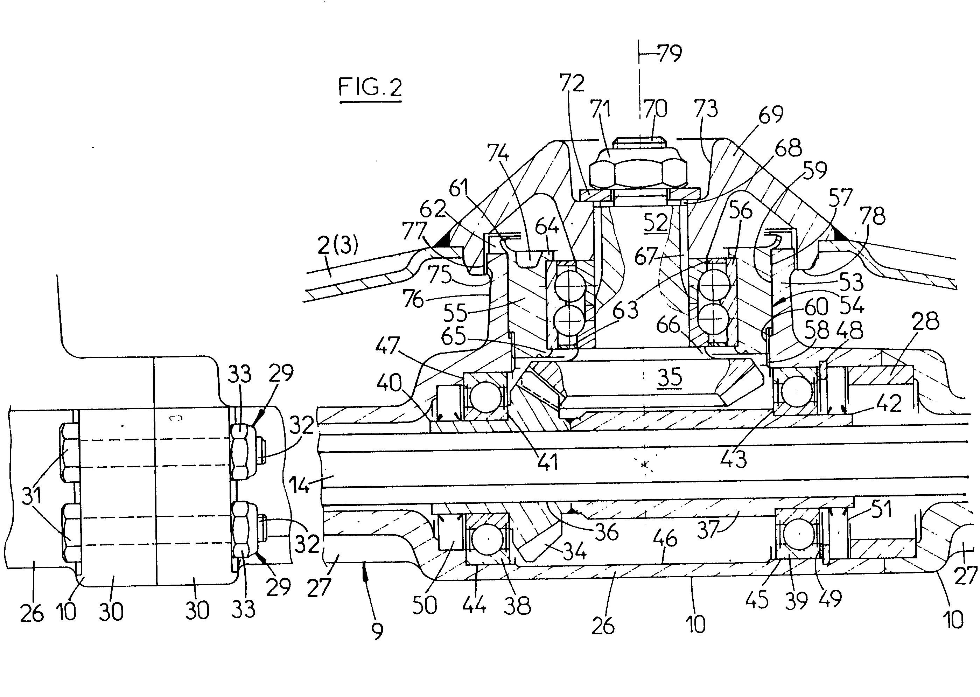

Sur la figure 2, on voit une coupe de la barre de coupe (1). Comme dit plus haut, le carter (9) comporte une pluralité de modules (10). Chaque module (10) supporte un disque (2, 3). Le module (10) se compose d'un boîtier (26) dans lequel est guidé en rotation ledit disque (2, 3), et d'une entretoise (27) qui s'étend entre ce boîtier (26) et le boîtier (26) d'un module (10) adjacent. Avantageusement, l'entretoise (27) d'un module (10) s'étend à gauche du boîtier (26) du même module, vu dans le sens d'avance de la machine au travail. Les différents modules (10) sont centrés l'un par rapport à l'autre au moyen d'une bague de centrage (28) qui s'étend à la fois à l'intérieur de l'entretoise (27) d'un module (10) et à l'intérieur du boîtier (26) du module (10) adjacent. La baque de centrage (28) a une longueur telle qu'elle puisse absorber une partie des efforts de flexion qui s'exercent sur la barre de coupe (1) pendant le travail et pendant le transport. Les différents modules (10) sont liés l'un à l'autre au moyen d'organes d'assemblage (29). Pour ce faire, chaque module (10) comporte à chacune de ces extrémités une bride (30). Les brides (30) de deux modules (10) adjacents sont liées entre elles par les organes d'assemblage (29) qui sont constitués par des vis (31) dont la tige (32) traverse les deux brides (30) adjacentes, et par des écrous (33) vissés sur lesdites tiges (32). Les brides (30) ont chacune une certaine largeur de sorte que la longueur des vis (31) soit suffisante pour leur permettre d'encaisser les sollicitations auxquelles elles sont soumises.

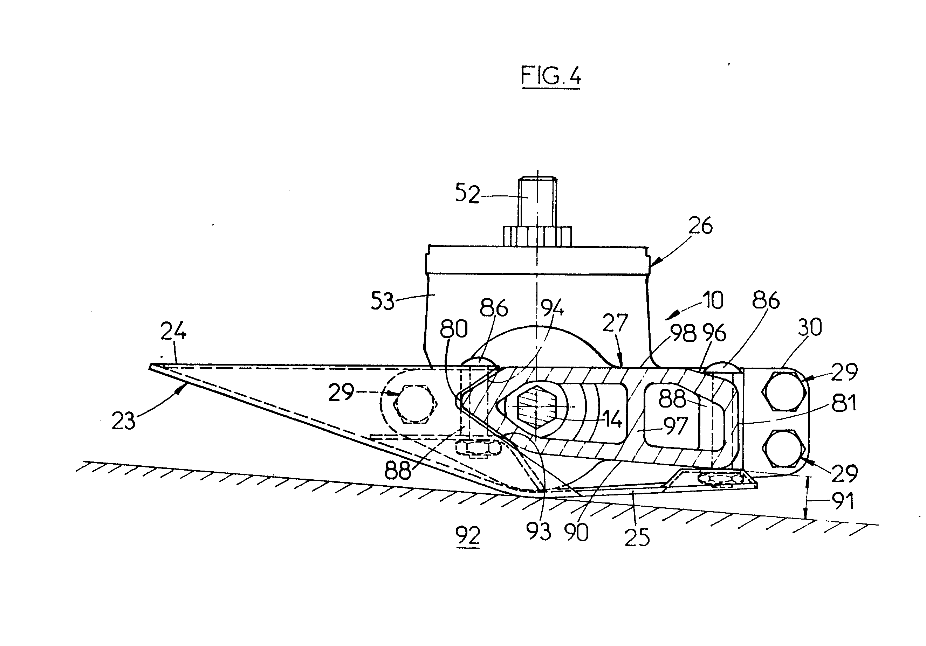

Le carter (9) ainsi formé, contient un arbre de transmission (14). En traversant chaque boîtier (26), l'arbre de transmission (14) collabore avec un couple de roues dentées coniques (34, 35) en vue de transmettre le mouvement au disque (2, 3) correspondant. Pour ce faire, l'arbre de transmission (14) traverse l'alésage (36) de la roue dentée (34) qui possède la forme complémentaire de celle de l'arbre de transmission (14). Dans l'exemple décrit, l'arbre de transmission (14) a une section hexagonale (voir figure 4). Il est cependant possible que l'arbre ait une section d'une autre forme dès lors que cette forme permet un entraînement en rotation. De même, il est possible que l'arbre de transmission (14) ne présente la forme permettant l'entraînement en rotation que dans la zone où il collabore avec la roue dentée (34).

La roue dentée (34) est solidaire d'un fourreau .(37) qui entoure également l'arbre de transmission (14). L'ensemble roue dentée (34)—fourreau (37) est guidé en rotation dans le boîtier (26) au moyen de deux paliers tels que des roulements à billes (38, 39). Pour ce faire, la roue dentée (34) comporte une portée cylindrique (40) sur laquelle est monté le roulement (38) qui bute contre un épaulement (41) de la roue dentée (34). Le fourreau (37), quant à lui, possède à son extrémité éloignée de la roue dentée (34), également une portée cylindrique (42) sur laquelle est monté le roulement (39) qui bute contre un épaulement (43) du fourreau (37). Les roulements (38, 39) sont ainsi montés sur l'ensemble roue dentée (34)—fourreau (37) de sorte que la denture de la roue dentée (34) soit située entre les deux roulements (38, 39).

Avantageusement, le diamètre extérieur des roulements (38, 39) est le même, ce qui présente des avantages au niveau de la réalisation des portées extérieures (44, 45) usinées dans le boîtier (26). De même, la longueur desdites portées extérieures est réduite au juste minimum en vue de diminuer les temps d'usinage et faciliter le montage. Pour cela, la partie (46) du boîtier (26) située entre les portées extérieures (44, 45) possède un diamètre plus grand que le diamètre des portées (44, 45). Le maintien en translation de l'ensemble roue dentée (34)—fourreau (37) dans le boîtier (26) est réalisé d'une part par un épaulement (47) aménagé dans le boîtier (26), et d'autre part par un organe d'arrêt tel que le circlips (48). Entre le roulement (39) et l'organe d'arrêt (48), on a disposé des rondelles d'épaisseur (49) qui permettent au montage de diminuer ou d'éliminer le jeu axial résultant des différentes tolérances dimensionnelles.

Comme le boîtier (26) contient un lubrifiant, on a agencé sur les portées cylindriques (40, 42) de la roue dentée (34) respectivement du fourreau (37) des organes d'étanchéité tels que les bagues d'étanchéité (50, 51) qui agissent entre le boîtier (26) et l'ensemble roue dentée (34)—fourreau (37). Les deux organes d'étanchéité (50, 51) sont disposés de sorte que les deux roulements (38, 39) et la denture de la roue dentée (34) soient situés entre les deux organes d'étanchéité (50, 51). Avec cet agencement, le boîtier (26) reste donc étanche indépendamment de la présence de l'arbre de transmission (14).

La roue dentée (34) engrène avec la roue dentée (35) qui est solidaire d'un arbre de disque (52). L'arbre de disque (52) est guidé en rotation dans un cylindre de palier (53) au moyen d'un palier (54) qui se compose, dans l'exemple de réalisation décrit, d'une boîte à roulement (55) et d'un roulement (56). Comme visible sur la figure 2, le cylindre de palier (53) fait partie intégrante du boîtier (26) donc du module (10). L'alésage intérieur du cylindre de palier (53) comporte une partie lisse (57) et une partie filetée (58). De même, la surface extérieure du palier (54) comporte également une partie lisse (59) et une partie filetée (60). Le filetage des parties filetées (58, 60) est avantageusement un filetage à pas fin.

Grâce aux parties lisses (57 et 59) le palier (54) est centré dans le cylindre de palier (53), et grâce aux parties filetées (58, 60), ledit palier (54) est maintenu en translation dans ledit cylindre de palier (53).

Afin que le palier (54) ne puisse tourner une fois qu'il a été vissé dans le cylindre de palier (53), ledit palier (54) est muni à sa partie supérieure d'une couronne cylindrique mince (61) qui est partiellement déformée pour collaborer avec au moins une encoche (62) aménagée dans la partie supérieure du cylindre de palier (53). La boîte à roulement (55) supporte le roulement (56) qui est centré dans l'alésage de ladite boîte à roulement. Ce roulement est dans l'exemple décrit, un roulement à double rangée de billes à contact oblique. Il est muni de moyens d'étanchéité intégrés (63). Le roulement (56) est maintenu en translation dans la boîte à roulement (55) au moyen de deux épaulements (64, 65). L'épaulement (64) est réalisé par usinage tandis que l'épaulement (65) est réalisé après montage du roulement (56) d'une manière qui sera expliquée plus loin.

L'ensemble arbre de disque (52)—roue dentée (35) est centré dans l'alésage du roulement (56) dont la bague intérieure bute contre l'épaulement (66) de la roue dentée (35). Près de son extrémité libre, l'arbre de disque (52) est muni de cannelures (67) qui collaborent, en vue de l'entraînement en rotation du disque (2, 3) avec des cannelures (68) aménagées dans un entraîneur (69) solidaire du disque (2, 3). Dans le but de fixer le disque (2, 3) sur l'arbre de disque (52), ce dernier se termine par une partie filetée (70) qui s'étend au-dehors de l'entraîneur (69), et sur laquelle est vissé un écrou (71) après interposition d'une rondelle (72). En vissant l'écrou (71) sur la partie filetée (70), on bloque le roulement (56) entre l'épaulement (66) et l'entraîneur (69). Afin de protéger l'écrou (71) contre l'usure, celui-ci est logé dans un évidement (73) aménagé dans la partie supérieure de l'entraîneur (69).

Le montage d'un boîtier (26) s'effectue de la manière suivante. On prémonte d'abord l'ensemble roue dentée (34)—fourreau (37) c'est-à-dire qu'on monte sur la partie cylindrique (40) le roulement (38) puis l'organe d'étanchéité (50), et sur la partie cylindrique (42) le roulement (39). L'ensemble ainsi prémonté est alors enfilé dans le boîtier (26) jusqu'à ce que le roulement (38) bute contre l'épaulement (47). On met ensuite en place le nombre de rondelles d'épaisseur (49) nécessaire et on verrouille axialement l'ensemble à l'aide de l'organe d'arrêt (48). Le boîtier (26) est alors rendu étanche en montant l'organe d'étanchéité (51). On prémonte ensuite l'ensemble roue dentée (35)—arbre de disque (52)—palier (54). Pour ce faire, on monte le palier (54) sur l'arbre de disque (52) jusqu'à ce qu'il bute sur l'épaulement (66). On monte ensuite cet ensemble dans le cylindre de palier (53). Ceci est possible car le plus petit diamètre de l'alésage du cylindre de palier (53) est plus grand que le diamètre extérieur de la roue dentée (35). Avantageusement, lors du montage, le palier (54) se centre d'abord dans le cylindre de palier (53) par l'intermédiaire des parties lisses (57, 59) avant que les parties filetées (58, 60) ne puissent être vissées l'une dans l'autre. On s'assure ainsi que les deux parties filetées (58, 60) sont en face l'une de l'autre, ce qui permet d'éviter les tâtonnements lors de l'amorce du vissage. En sus, les parties filetées (58, 60) sont disposées de telle façon dans le boîtier (26) respectivement sur le palier (54), par rapport aux roues dentées (34, 35), pour que lesdites parties filetées (58, 60) ne puissent pas être amenées en prise lorsqu'une dent de la roue dentée (35) bute sur une dent de la roue dentée (34). Le vissage ne pourra alors être effectué que lorsqu'une des roues dentées aura été légèrement tournée par rapport à l'autre. A mesure qu'on visse alors le palier (54) dans le cylindre de palier (53), on rapproche la roue dentée (35) de la roue dentée (34). Lorsque la roue dentée (35) occupe la bonne position par rapport à la roue dentée (34), c'est-à-dire que le jeu de fonctionement correct entre les deux roues est atteint, on arrête le vissage du palier (54) dans le cylindre de palier (53). Pour maintenir cette position, on déforme une partie de la couronne cylindrique mince (61) pour la faire pénétrer dans au moins une encoche (62). On remarquera que pour faciliter le vissage et le dévissage ultérieur lors d'une intervention, le palier (54) est muni d'au moins un moyen de prise tel que le creux (74). Etant donné que le palier (54) n'est pas centré dans le cylindre de palier (53) avec serrage, et selon la nature du lubrifiant contenu dans le boîtier (26), il peut s'avérer nécessaire d'empêcher ledit lubrifiant de fuir entre ledit palier (54) et ledit cylindre de palier (53). Pour ce faire, il est possible de disposer entre ces deux pièces des moyens d'étanchéité, tels qu'une colle par exemple déposée entre le palier (54) et le cylindre de palier (53).

Dans le montage représenté sur la figure 2, la roue dentée (34) s'étend à gauche de l'arbre de disque (52). Cette position définit donc un sens de rotation du disque correspondant. Pour un disque qui tourne dans le sens contraire, le montage devra donc être fait de sorte que la roue dentée (34) correspondante s'étende à droite de l'axe de disque (52), l'arbre de transmission (14) tournant toujours dans le même sens. Dans ce cas, le montage de l'ensemble roue dentée (34)—fourreau (37) dans le boîtier (26) correspondant se fera de la manière suivante. L'organe d'étanchéité (50) sera monté sur la partie cylindrique (42) et l'ensemble sera enfilé dans le boîtier (26) fourreau (37) d'abord, jusqu'à ce que le roulement (39) bute contre l'épaulement (47). On monte ensuite le nombre nécessaire de rondelles d'épaisseur (49) et on verrouille axialement à l'aide de l'organe d'arrêt (48). Enfin, on monte l'organe d'étanchéité (51). Dans ce cas, le montage de l'ensemble roue dentée (35)—arbre de disque (52)—palier (54) ainsi que le réglage du jeu de fonctionnement entre les roues dentées (34, 35) restent identiques à ceux décrits plus hauts.

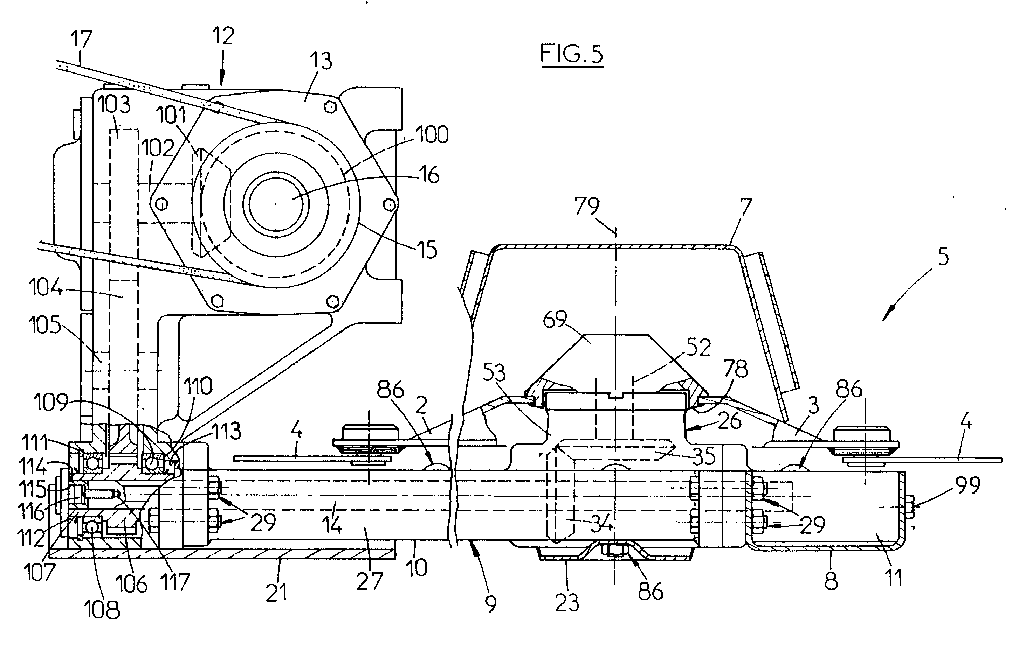

Dans le but de limiter l'enroulement et l'introduction de brins de fourrage ou de corps filiformes autour du cylindre de palier (53) respectivement dans le cylindre de palier (53), la surface extérieure de ce dernier comporte deux zones (75 et 76). La zone (75) est située dans la partie supérieure de la surface extérieure du cylindre de palier (53) et s'étend à l'intérieur d'un alésage (77) réalisé dans l'entraîneur (69). Le diamètre de l'alésage (77) est légèrement plus grand que le diamètre de la zone (75) en vue de former une chicane. La zone (76) s'étend à partir de la zone (75) vers le bas, et a un diamètre plus petit que celui de la zone (75). De plus la longueur de la zone (76) est relativement importante. Avantageusement, la surface inférieure (78) de l'entraîneur (69) s'étend sensiblement dans le voisinage de la frontière entre les zones (75 et 76) et préférentiellement légèrement plus haut que ladite frontière. Avantageusement également, la surface inférieure (78) de l'entraîneur (69) peut s'étendre depuis le voisinage de la frontière entre les zones (75 et 76) vers l'extérieur et vers le haut. Un exemple de réalisation d'un tel agencement est représenté sur la figure 5 où la surface inférieure (78) de l'entraîneur (69) est sensiblement conique. Avec cet agencement, on diminue substantiellement les risques d'enroulement de brins de fourrage ou de corps filiformes car l'espace entre les endroits fixes où les brins de fourrage ou les corps filiformes pourraient s'accrocher et le disque tournant, est relativement grand. Par ailleurs, si un tel enroulement arrivait à se produire, il ne pourrait pas pénétrer dans la chicane formée entre le cylindre de palier (53) et l'entraîner (69). En effet, lorsque l'enroulement arrive à la frontière des deux zones (75 et 76) et compte tenu de la rapidité avec laquelle cet enroulement progresse car la vitesse de rotation des disques est élevée, il a tendance à se propager vers l'extérieur et fermer l'angle formé entre le cylindre de palier (53) et l'entraîneur (69). Cette tendance à se propager vers l'extérieur est générée par la différence de diamètre entre les deux zones (75 et 76).

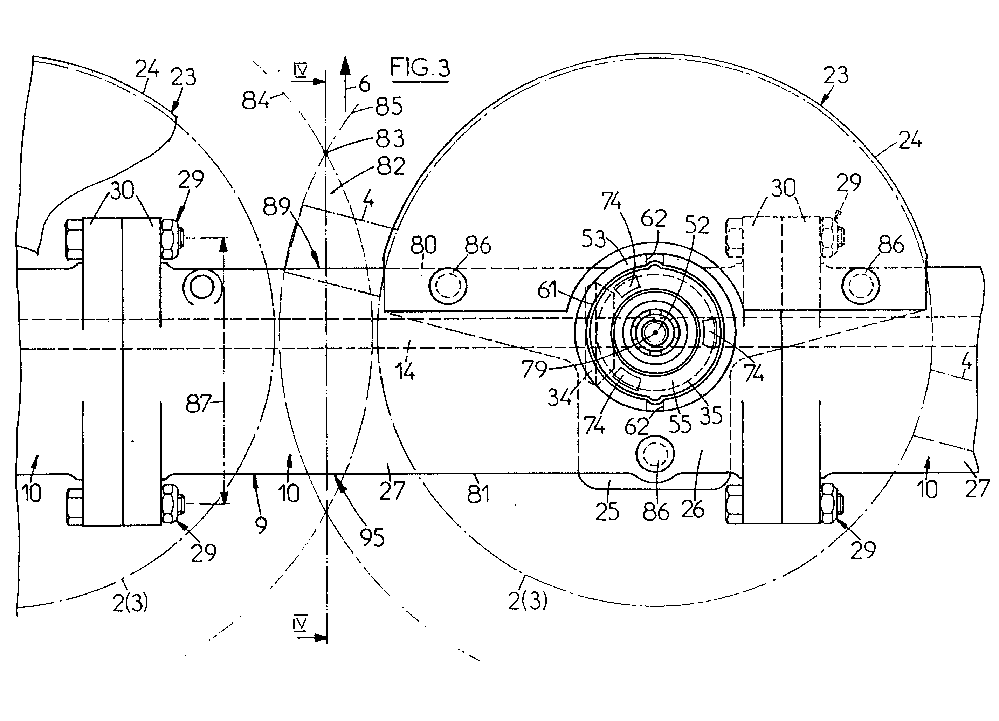

La figure 3 monte une vue de dessus de la barre de coupe (1). Pour plus de clarté, les disques (2, 3) ont été dessinés en traits mixtes. Sur cette figure, on voit que l'axe (79) du cylindre de palier (53) qui correspond également à l'axe de rotation du disque (2, 3) correspondant est situé plus près du bord avant (80) du carter (9) que du bord arrière (81) de ce carter. De ce fait, le triangle de surcoupe (82) qui est défini par le point d'intersection avant (83) des trajectoires extrêmes (84, 85) décrites par les outils de coupe (4) de deux disques adjacents, et le bord avant (80) du carter (9), est très grand. Ceci permet de garantir une bonne coupe du fourrage entre deux disques adjacents.

Au niveau de chaque cylindre de palier (53), s'étend le patin protecteur de disque (23). Ce patin protecteur de disque (23) comporte, comme dit plus haut, une partie frontale (24) ayant une forme sensiblement circulaire et sensiblement centrée sur l'axe (79). Le patin protecteur de disque (23) est fixé sur le carter (9) au moyen d'un certain nombre d'organes de fixation (86), trois dans l'exemple décrit. Ces organes de fixation (86) s'étendent près du bord avant (80) et du bord arrière (81) du carter (9).

De même, les organes d'assemblage (29) qui lient les différents modules (10) entre eux, s'étendent également à l'avant et à l'arrière des brides (30). Avantageusement, la distance (87) entre les organes d'assemblage (29) qui s'étendent à l'avant, et ceux qui s'étendent à l'arrière, est relativement grande pour que la liaison entre les modules (10) soit très résistante.

Sur la figure 3, on voit encore la manière selon laquelle la couronne cylindrique mince (61) du palier (54) est déformée pour pénétrer dans les encoches (62) du cylindre de palier (53) pour condamner la rotation du palier (54). On remarquera que pour une intervention au niveau du boîtier (26), il suffira de dégager la couronne cylindrique mince (61) des encoches (62) du cylindre de palier (53) pour pouvoir dévisser le palier (54).

La figure 4 montre une coupe transversale de la barre de coupe (1). Sur cette figure, on voit que les patins protecteur de disque (23) s'emboîtent partiellement sur le bord avant (80) du carter (9). Les organes de fixation (86) qui fixent ces patins protecteur de disque (23) sur le carter (9), traversent ledit carter (9) qui comporte à cet effet des bossages percés (88).

Le bord avant (80) de l'entretoise (27) a une forme relativement pointue. Grâce à cette forme, on diminue les risques de collage de terre ou de débris végétaux audit bord avant (80), ce qui diminuerait la qualité de la coupe. Il est à noter que l'entretoise (27) présente cette forme pointue au moins dans la zone (89) qui s'étend entre deux disques (2, 3) voisins là où les outils de coupe (4) passent au-dessus du carter (9) pendant leur rotation (voir figure 3).

Par ailleurs, la face inférieure (90) de l'entretoise (27) s'étend à une certaine distance (91) de la surface du sol (92). Ainsi, la terre et/ou les débris végétaux éventuellement raclés par l'avant du carter (9), peuvent s'échapper sous le carter (9). Il est à noter que cet espace entre la face inférieure (90) de l'entretoise (27) et la surface du sol (92) s'étend de préférence sur toute la longueur de l'entretoise (27).

Afin de bien canaliser la terre et/ou les débris végétaux vers ledit espace, le bord avant (80) de l'entretoise (27) possède avantageusement un plan incliné (93) dirigé vers l'arrière et vers le bas. Ce plan incliné (93) s'étend au moins dans la zone (89) du bord avant (80).

Le bord avant (80) possède également un plan incliné (94) dirigé vers le haut et vers l'arrière. Avec cette forme, le choc entre un outil de coupe (4) accidentellement plié vers le bas et le bord avant (80) est atténué. De plus, compte tenu de la vitesse de rotation, le plan incliné (94) peut quelque peu redresser un outil de coupe (4) plié.

Pour que le carter (9) soit capable de bien encaisser le choc occasionné par un outil de coupe (4) plié et pour diminuer les risques d'entaillage du carter (9) lors d'un tel choc, la partie supérieure du bord avant (80) au moins possède une épaisseur de matière plus importante que le reste de la section de l'entretoise (27). Il est à noter que le plan incliné (94), et l'endroit où l'épaisseur de matière est plus importante s'étendent au moins dans la zone (89) (voir figure 3). Lorsqu'un outil de coupe (4) plié vers le bas n'a pu être entièrement redressé il peut alors frapper le bord arrière (81) du module (10) adjacent dans la zone (95) au-dessus de laquelle il passe lors de sa rotation vers le carter (9). Pour atténuer également dans ce cas le choc, le bord arrière (81) de l'entretoise (27) possède au moins dans la zone (95), un plan incliné (96) dirigé vers l'avant et vers le haut. De même, comme pour le bord avant (80), l'épaisseur de matière dans cette zone est également plus importante que dans le reste de la section transversale de l'entretoise (27).

Dans le but de rigidifier le profile de l'entretoise (27), il est possible d'agencer au moins une nervure (97) qui relie la face inférieure (90) à la face supérieure (98) de l'entretoise (27). Cette nervure (97) peut même se prolonger dans le boîtier (26) et relier les deux brides (30) d'un module (10).

La figure 5 montre les extrémités (5) et (12) de la barre de coupe (1).

A l'extrémité (5), la barre de coupe (1) comporte, comme dit précédemment, un module d'extrémité (11) qui ferme l'extrémité (5) de la barre de coupe (1). Ce module d'extrémité (11) s'étend jusqu'à la trajectoire extrême du disque (3) ou légèrement au-delà. Ainsi, le module d'extrémité (11) peut protéger, dans une certaine mesure, latéralement le disque (3). La planche à andains (8) est fixée sur le module d'extrémité (11) à l'aide des organes d'assemblage (29) qui fixent ledit module d'extrémité (11) sur le module (10) qui supporte le disque (3), et à l'aide d'organes de liaison (99).

A l'extrémité (12) s'étend le carter de renvoi (13). Comme dit plus haut, le carter de renvoi (13) contient un mécanisme d'entraînement qui transmet le mouvement de la poulie (15) à l'arbre de transmission (14). Ce mécanisme d'entraînement se compose des organes suivants Une roue dentée (100) est calée sur l'axe (16) sur lequel est également calée la poulie (15). Cette roue dentée (100) engrène avec une roue dentée (101) qui est calée sur un axe (102) lequel s'étend sensiblement perpendiculairement à l'axe (16) et sensiblement parallèlement à l'arbre de transmission (14). Sur l'axe (102) est également calée une roue dentée cylindrique (103) qui engrène avec une autre roue dentée cylindrique (104) calée sur un axe (105). L'axe (105) s'étend sensiblement parallèlement à l'axe (102). Cette roue dentée cylindrique (104) engrène avec une troisième roue dentée cylindrique (106) calée sur l'arbre de transmission (14). Les axes (102 et 105) sont guidés en rotation dans le carter de renvoi (13) au moyen de paliers tels que des roulements connus de l'homme de l'art. La roue dentée cylindrique (106) comporte une partie cylindrique (107) qui s'étend concentriquement de part et d'autre de sa denture et qui sert de portée à des paliers tels que les roulements (108, 109) guidant en rotation ladite roue dentée (106). L'arrêt en translation de la roue dentée (106) est réalisé au moyen d'un épaulement (110) aménagé dans le carter de renvoi (13) et d'un circlips (111). Le carter de renvoi (13) comporte également à sa base des organes d'étanchéité (112, 113) qui s'étendent entre les parois dudit carter de renvoi (13) et la partie cylindrique (107) afin de rendre le carter de renvoi étanche indépendamment de la présence de l'arbre de transmission (14). La partie cylindrique (107) comporte un alésage (114) ayant la forme complémentaire de celle de l'arbre de transmission (14), en vue de coopérer avec cet arbre de transmission (14) qui s'étend partiellement à l'intérieur dudit alésage (114). Afin de maintenir axialement l'arbre de transmission (14), l'ensemble roue dentée (106)—partie cylindrique (107) comporte un organe d'arrêt (115) qui est lié rigidement à cet ensemble ou tout au moins lié en translation par rapport à celui-ci. Une vis (116), dont la tête s'appuie sur l'organe d'arrêt (115) et dont la tige traverse ce dernier, est vissée dans un trou fileté (117) aménagé en bout de l'arbre de transmission (14).

Pour démonter l'arbre de transmission (14), il faut enlever la vis (116) pour libérer axialement l'arbre de transmission (14). On enlève ensuite le module d'extrémité (11) et on retire l'arbre de transmission (14) par l'extrémité (5) de la barre de coupe (1). Afin de pouvoir saisir l'arbre (14), celui-ci s'étend au-delà du dernier module (10) et peut même comporter à cet endroit des moyens de prise.

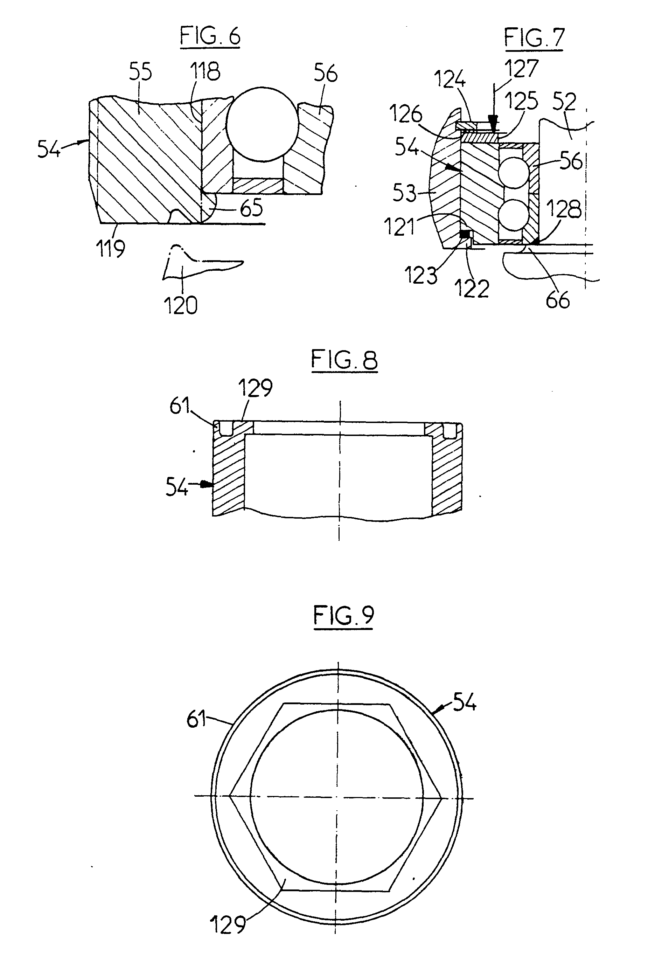

La figure 6 montre la manière de former l'épaulement (65). Avant montage l'alésage (118) de la boîte à roulement (55) débouche sur la face (119) de la boîte à roulement (55) tel que cela est représenté en traits mixtes. Après montage du roulement (56) dans l'alésage (118), on enfonce l'outil (120) dans la face (119), ce qui a pour effet de déformer l'endroit de l'alésage (118) qui débouche sur la face (119). La déformation provoque un déplacement de la matière vers l'axe de la boîte à roulement (55) qui maintient alors le roulement (56) dans ladite boîte à roulement (55).

La figure 7 montre une autre forme de réalisation du palier (54). Dans cet exemple, il s'agit d'un roulement (56) spécial, dont la bague extérieure à une dimension suffisante pour être centrée dans le cylindre de palier (53). La bague extérieure de ce roulement (56) comporte un épaulement (121). De même, l'alésage du cylindre de palier (53) comporte un épaulement (122). Entre les épaulements (121 et 122) est disposé un joint torique (123). Le roulement (56) est maintenu axialement dans le cylindre de palier (53) par l'intermédiaire des épaulements (121 et 122) et du joint torique (123), et par l'intermédiaire d'un circlips (124) après interposition d'une rondelle (125) et de rondelles d'épaisseur (126).

Le montage du palier (54) dans le cylindre de palier (53) et le réglage du jeu de fonctionnement des roues dentées (34, 35) s'effectuent dans ce cas comme suit. On monte le palier (54) dans le cylindre de palier (53) et on appuie sur le palier (54) ou la rondelle (125) pour écraser le joint torique (123) (l'opération de déformation du joint torique (123) est matérialisée par la flèche (127)). Lorsque le jeu de fonctionnement correct des roues dentées (34, 35) est obtenu, on maintient la pression, on monte le nombre de rondelles d'épaisseur (126) nécessaire, et on met en place le circlips (124). Après relâchement de la pression, le palier (54) maintient sa position dans le cylindre de palier (53). Il est à noter que le joint torique (123) empêche également des fuites du lubrifiant contenu dans le boîtier (26), entre le palier (54) et le cylindre de palier (53).

Le joint torique (128) empêche la fuite de lubrifiant entre le palier (54) et l'arbre de disque (52).

Les figures 8 et 9 montrent une variante de réalisation des moyens de prise qui permettent le vissage ou le dévissage du palier (54). Ces moyens sont constitués par une partie centrale (129) qui émerge de la face supérieure du palier (54) et qui a une surface extérieure non circulaire et de préférence polygonale. Dans l'exemple représenté, cette surface extérieure est hexagonale. Il est ainsi possible d'employer une clé classique pour visser ou dévisser le palier (54).

Divers modifications ou perfectionnements des exemples décrits sont possibles sans pour autant sortir du cadre de l'invention, tel que defini par les revendications.

En particulier, l'arbre de transmission (14) pourra être réalisé en plusieurs parties. Par ailleurs les zones de l'arbre de transmission (14) où celui-ci coopère avec une roue dentée (106, 34) pourront avoir une dimension nominale plus grande que le reste de l'arbre de transmission (14). En sus, le palier (54) pourrait également être un palier lisse.

**Revendications**

1. Faucheuse comportant des organes de coupe rotatifs (2, 4; 3, 4) s'étendant au-dessus d'un carter (9) et munis d'au moins un outil de coupe (4), lesdits organes de coupe (2, 4; 3, 4) ayant des trajectoires (84, 85) sécantes et une partie au moins desdits organes de coupe rotatifs (2, 4; 3, 4) étant entraînée par des moyens de transmission (106, 14, 34, 35, 52) logés dans le carter (9) qui comporte des boîtiers (26) dans lesquels sont guidés en rotation cette partie d'organes de coupe rotatifs (2, 4; 3, 4) et des éléments entretoises (27) dont chacun détermine la distance entre deux boîtiers (26) voisins, lesdits boîtiers (26) et lesdits éléments entretoises (27) s'étendant au moins sensiblement dans le prolongement l'un de l'autre suivant la direction longitudinale du carter (9) et étant liés entre-eux par des organes d'assemblage (29) s'étendant au moins sensiblement parallèlement à la direction longitudinale du carter (9) et, en vue de dessus, au moins sensiblement sous les organes de coupe rotatifs (2, 4; 3, 4), une partie desdits organes d'assemblage (29) s'étendant à l'avant du carter (9) et une partie desdits organes d'assemblage (29) s'étendant à l'arrière dudit carter (9), caractérisée par le fait que le carter (9) comporte des modules (10) chacun formé par un seul boîtier (26) et un seul élément entretoise (27) en une seule pièce, ledit élément entretoise (27) étant situé d'un seul et même côté du boîtier (26) correspondant, que chaque module (10) est muni à chacune de ses extrémités d'une bride (30), et que les organes d'assemblage (29) comportent un certain nombre de boulons (31, 33) associés à une paire de modules (10) adjacents, lesdits boulons (31, 33) traversant exclusivement les brides (30) adjacentes de ladite paire de modules (10) adjacents.

2. Faucheuse selon la revendication 1, caractérisée par le fait que l'élément entretoise (27) d'un module (10) s'étend, vu dans le sens de travail (6), à gauche du boîtier (26) qui fait partie du même module (10).

3. Faucheuse selon l'une des revendications 1 ou 2, caractérisée par le fait que le boîtier (26) comporte un cylindre de palier (53) d'axe (79) dirigé vers le haut, et que ledit cylindre de palier (53) fait partie intégrante du module (10).

4. Faucheuse selon l'une au moins des revendications 1 à 3, caractérisée par le fait que l'axe (79) du cylindre de palier (53) du boîtier (26) est situé près du bord avant (80) du module (10).

5. Faucheuse selon l'une au moins des revendications 1 à 4, caractérisée par le fait que deux modules (10) voisins sont centrés l'un par rapport à l'autre.

6. Faucheuse selon la revendication 5, caractérisée par le fait que deux modules (10) voisins sont centrés l'un par rapport à l'autre au moyen d'un organe supplémentaire (28).

7. Faucheuse selon l'une au moins des revendications 1 à 6, caractérisée par le fait qu'au travail une partie au moins de la face inférieure (90) de l'élément entretoise (27) est située à une certaine distance (91) du sol (92).

8. Faucheuse selon l'une au moins des revendications 1 à 7, caractérisée par le fait que le bord avant (80) de l'élément entretoise (27) est sur une partie au moins de sa longueur, relativement pointu.

9. Faucheuse selon l'une au moins des revendications 1 à 8, caractérisée par le fait que le bord avant (80) de l'élément entretoise (27) présente, sur une partie au moins de sa longueur, un plan incliné (93) dirigé vers l'arrière et vers le bas.

10. Faucheuse selon l'une au moins des revendications 1 à 9, caractérisée par le fait que le bord avant (80) de l'élément entretoise (27) présente, au moins dans la zone (89) au-dessus de laquelle passent les outils de coupe (4) pendant leur rotation, un plan incliné (94) dirigé vers l'arrière et vers le haut.

11. Faucheuse selon l'une au moins des revendications 1 à 10, caractérisée par le fait que le bord avant (80) de l'élément entretoise (27) présente au moins dans sa partie supérieure, et au moins dans la zone (89) au-dessus de laquelle passent les outils de coupe (4) pendant leur rotation, une épaisseur de matière plus importante.

12. Faucheuse selon l'une au moins des revendications 1 à 11, caractérisée par le fait que le bord arrière (81) de l'élément entretoise (27) présente, au moins dans la zone (95) au-dessus de laquelle passent les outils de coupe (4) pendant leur rotation, un plan incliné (96) dirigé vers l'avant et vers le haut.

13. Faucheuse selon l'une au moins des revendications 1 à 12, caractérisée par le fait que le bord arrière (81) de l'élément entretoise (27) présente, au moins dans sa partie supérieure et au moins dans la zone (95) au-dessus de laquelle passent les outils de coupe (4) pendant leur rotation, une épaisseur de matière plus importante.

14. Faucheuse selon l'une au moins des revendications 1 à 13, caractérisée par le fait que le boîtier (26) comporte un cylindre de palier (53) présentant une première zone de révolution (75) d'un certain diamètre qui collabore avec une partie de l'organe de coupe rotatif (2, 4; 3, 4) correspondant, tel qu'un alésage (77) par exemple, en vue de former une chicane, et une deuxième zone de révolution (76) d'un diamètre plus petit que le diamètre de la première zone de révolution (75).

15. Faucheuse selon la revendication 14, caractérisée par le fait que la longueur de la deuxième zone de révolution (76) est relativement grande.

16. Faucheuse selon l'une des revendications 14 ou 15, caractérisée par le fait que la surface inférieure (78) de l'organe de coupe (2, 4; 3, 4) qui délimite le bas de la partie de l'organe de coupe (2, 4; 3, 4) formant une chicane avec la première zone (75) du cylindre de palier (53), s'étend sensiblement dans le voisinage de la frontière entre les zones (75 et 76) du cylindre de parlier (53), et de préférence légèrement plus haut que ladite frontière.

17. Faucheuse selon la revendication (16), caractérisée par le fait que la surface inférieure (78) de l'organe de coupe (2, 4; 3, 4) s'étend depuis le voisinage de la frontière entre les zones (75 et 76) du cylindre de palier (53), vers l'extérieur et vers le haut.

18. Faucheuse selon l'une au moins des revendications 1 à 17, caractérisée par le fait que les moyens de transmission (14, 34, 35) logés dans le carter (9) sont constitués par un arbre de transmission (14) en une ou plusieurs parties, et d'un couple de roues dentées (34, 35) par organe de coupe rotatif (2, 4' 3, 4) transmettant le mouvement de l'arbre de transmission (14) à l'arbre (52) de l'organe de coupe rotatif (2, 4; 3, 4), tel qu'un couple de roues dentées coniques par exemple.

19. Faucheuse selon l'une au moins des revendications 1 à 18, caractérisée par le fait que l'arbre (52) d'un organe de coupe rotatif (2, 4; 3, 4) est guidé dans un palier (54) logé dans l'alésage d'un cylindre de palier (53) dont est muni le boîtier (26) supportant ledit organe de coupe rotatif (2, 4; 3, 4), le plus petit diamètre de l'alésage du cylindre de palier (53) étant supérieur au diamètre extérieur du moyen de transmission (35) fixé sur l'arbre (52), de telle sorte que l'ensemble prémonté arbre (52)—moyen de transmission (35)—palier (54) puisse être monté dans l'alésage du cylindre de palier (53) et démonté dudit alésage.

20. Faucheuse selon la revendication (19) caractérisée par le fait que le palier (54) est démontable.

21. Faucheuse selon l'une des revendications 19 ou 20, caractérisée par le fait que le palier (54) comporte une boîte à roulement (55) et au moins un roulement (56).

22. Faucheuse selon la revendication (21), caractérisée par le fait que le ou les roulements (56) sont montés dans la boîte à roulement (55) de manière indémontable.

23. Faucheuse selon la revendication 22, caractérisée par le fait que le ou les roulements (56) sont maintenus dans la boîte à roulement (55) par au moins un épaulement (65) obtenu par déformation de la boîte à roulement (55).

24. Faucheuse selon l'une au moins des revendications 19 à 23, caractérisée par le fait que le montage comporte des moyens (58, 60; 121, 122, 123) qui permettent un réglage sensiblement continu du jeu de fonctionnement des moyens de transmission (34, 35) tel qu'un couple de roues dentées coniques.

25. Faucheuse selon la revendication 24, caractérisée par le fait que les moyens qui permettent le réglage du jeu de fonctionnement des moyens de transmission (34, 35), sont constitués par au moins un organe (123) que l'on déforme lors du montage du palier (54) dans le cylindre de palier (53).

26. Faucheuse selon l'une au moins des revendications 19 à 24, caractérisée par le fait que le palier (54) comporte sur sa surface extérieure une partie (60) au moins qui est filetée et que collabore avec une partie filetée (58) de l'alésage du cylindre de palier (53).

27. Faucheuse selon la revendication 26, caractérisée par le fait que le pas du filetage est un pas fin.

28. Faucheuse selon la revendication 26 ou 27, caractérisée par le fait que la surface extérieure du palier (54) comporte une partie non filetée (59) qui se centre dans une partie non filetée (57) du cylindre de palier (53).

29. Faucheuse selon la revendication 28, caractérisée par le fait que les parties non filetées (59, 57) du palier (54) et du cylindre de palier (53) coopèrent avant que les parties filetées (60, 58) dudit palier (54) et dudit cylindre de palier (53) ne commencent à être en prise.

30. Faucheuse selon l'une au moins des revendications 26 à 29, caractérisée par le fait que la partie filetée (58) du cylindre de palier (53) et la partie filetée (60) du palier (54) ne peuvent pas être amenées en prise l'une avec l'autre quand les moyens de transmission tels que le couple de roues dentées (34, 35) par exemple, ne sont pas en prise.

31. Faucheuse selon l'une au moins des revendications 26 à 30, caractérisée par le fait qu'après montage du palier (54) dans le cylindre de palier (53), des moyens (61, 62) condamnent la rotation relative entre ledit palier (54) et ledit cylindre de palier (53).

32. Faucheuse selon la revendication 31, caractérisée par le fait que les moyens (61, 62) qui condamnent la rotation relative entre le palier (54) et le cylindre de palier (53), sont constitués par au moins un organe (61) du palier (54) qui collabore avec un organe (62) du cylindre de palier (53).

33. Faucheuse selon la revendication 32, caractérisée par le fait que les organes (61, 62) du palier (54) et du cylindre de palier (53) qui doivent condamner la rotation relative du palier (54) par rapport au cylindre de palier (53), sont amenés en collaboration par déformation de l'un et/ou de l'autre des organes (61, 62).

34. Faucheuse selon la revendication 33, caractérisée par le fait que le palier (54) comporte une couronne cylindrique (61) à paroi relativement mince, et le cylindre de palier (53), au moins une encoche (62), et que la condamnation de la rotation relative entre le palier (54) et le cylindre de palier (53) est obtenue en déformant l'endroit de la couronne cylindrique (61) qui se trouve dans le voisinage de l'encoche (62), pour qu'il pénêtre dans ladite encoche (62).

35. Faucheuse selon l'une au moins des revendications 26 à 34, caractérisée par le fait que le palier (54) est muni de moyens de prise (74, 129) qui permettent son vissage ou son dévissage.

36. Faucheuse selon la revendication 35, caractérisée par le fait que les moyens de prise sont constitués par au moins un creux (74) aménagé dans la face supérieure du palier (54).

37. Faucheuse selon la revendication 35, caractérisée par le fait que les moyens de prise sont constitués par une partie centrale (129) qui émerge à la face supérieure du palier (54), et qui a une surface extérieure non circulaire.

38. Faucheuse selon l'une au moins des revendications 19 à 37, caractérisée par le fait que des moyens d'étanchéité empêchent les fuites de lubrifiant entre le palier (54) et le cylindre de palier (53).

**Patentansprüche**

1. Mähmaschine mit rotierenden Schneidorganen (2, 4; 3, 4), die sich oberhalb eines Gehäuses (9) erstrecken und mit zumindest einem Schneidwerkzeug (4) ausgestattet sind, welche Schneidorgane (2, 4; 3, 4) einander schneidende Bewegungsbahnen (84, 85) haben und zumindest ein Teil der rotierenden Schneidorgane (2, 4; 3, 4) durch Übertragungsmittel (106, 14, 34, 35, 52) angetrieben werden, die im Gehäuse (9) angeordnet sind, welches Lagergehäuse (26), in welchen dieser Teil der rotierenden Schneidorgane (2, 4; 3, 4) drehbar geführt ist, und Zwischenstücke (27) umfasst, die jeweils den Abstand zwischen zwei benachbarten Lagergehäuse (26) bestimmen, wobei sich die Lagergehäuse (26) und die Zwischenstücke (27) zumindest im wesentlichen in der Verlängerung voneinander entsprechend der Längsrichtung des Gehäuses (9) erstrecken und miteinander durch Verbindungsorgane (29) verbunden sind, die sich zumindest im wesentlichen parallel zur Längsrichtung des Gehäuses (9) und in Draufsicht im wesentlichen unter den rotierenden Schneidorganen (2, 4; 3, 4) erstrecken, wobei ein Teil der Verbindungsorgane (29) an der Vorderseite des Gehäuses (9) und ein Teil dieser Verbindungsorgane (29) an der Rückseite des Gehäuses (9) vorgesehen sind, dadurch gekennzeichnet, dass das Gehäuse (9) Module (10) umfasst, die jeweils einstückig aus einem einzigen Lagergehäuse (26) und einem einzigen Zwischenstück (27) gebildet sind, wobei sich das Zwischenstück (27) auf ein und derselben Seite des entsprechenden Lagergehäuses (26) befindet, dass jedes Modul (10) an jedem Ende mit einem Flansch (30) versehen ist und dass die Verbindungsorgane (29) eine gewisse Anzahl von einem Paar aneinandergrenzender Module (10) zugeordneten Schraubenbolzen (31, 33) umfassen, welche Schraubenbolzen (31, 33) ausschliesslich die banachbarten Flansche (30) der beiden aneinandergrenzenden Module (10) durchsetzen.

2. Mähmaschine nach Anspruch 1, dadurch gekennzeichnet, dass sich das Zwischenstück (27) eines Moduls (10), in der Arbeitsrichtung (6) betrachtet, links vom Lagergehäuse (26) erstreckt, das einen Teil desselben Moduls (10) bildet.

3. Mähmaschine nach einem der Ansprüche 1 oder 2, dadruch gekennzeichnet, daß das Lagergehäuse (26) einen Lagerzylinder (53) mit aufrechtstehender Achse (79) umfaßt, und daß der Lagerzylinder (53) einen integrierten Bestandteil des Moduls (10) bildet.

4. Mähmaschine nach zumindest einem der Ansprüche 1 bis 3, dadurch gekennzeichnet, daß sich die Achse (79) des Lagerzylinders (53) des Lagergehäuses (26) nahe dem vorderen Rand (80) des Moduls (10) befindet.

5. Mähmaschine nach zumindest einem der Ansprüche 1 bis 4, dadurch gekennzeichnet, daß zwei benachbarte Module (10) in bezug aufeinander zentriert sind.

6. Mähmaschine nach Anspruch 5, dadurch gekennzeichnet, daß zwei benachbarte Module (10) in bezug aufeinander mittels eines zusätzlichen Organs (28) zentriert sind.

7. Mähmaschine nach zumindest einem der Ansprüche 1 bis 6, dadurch gekennzeichnet, daß sich im Betrieb zumindest ein Teil der Unterseite (90) des Zwischenstücks (27) in einem gewissen Abstand (91) vom Boden (92) befindet.

8. Mähmaschine nach zumindest einem der Ansprüche 1 bis 7, dadurch gekennzeichnet, daß der vordere Rand (80) des Zwischenstücks (27) über zumindest einen Teil seiner Länge relativ spitz ist.

9. Mähmaschine nach zumindest einem der Ansprüche 1 bis 8, dadurch gekennzeichnet, daß der vordere Rand (80) des Zwischenstücks (27) über zumindest einen Teil seiner Länge eine nach hinten und unten gerichtete geneigte Ebene (93) aufweist.

10. Mähmaschine nach zumindest einem der Ansprüche 1 bis 9, dadurch gekennzeichnet, daß der vordere Rand (80) des Zwischenstücks (27) zumindest in dem Bereich (89), über welchem die Schneidwerkzeug (4) während ihrer Drehung umlaufen, eine nach hinten und oben gerichtete geneigte Ebene (94) aufweist.

11. Mähmaschine nach zumindest einem der Ansprüche 1 bis 10, dadurch gekennzeichnet, daß der vordere Rand (80) des Zwischenstücks (27) zumindest in seinem oberen Teil und zumindest in dem Bereich (89), über welchem die Schneidwerkzeuge (4) während ihrer Drehung umlaufen, eine größere Materialdicke hat.

12. Mähmaschine nach zumindest einem der Ansprüche 1 bis 11, dadurch gekennzeichnet, daß der hintere Rand (81) des Zwischenstücks (27) zumindest in dem Bereich (95), über welchem die Schneidwerkzeuge (4) während ihrer Drehung umlaufen, eine nach vorne und oben gerichtete geneigte Ebene (96) aufweist.

13. Mähmaschine nach zumindest einem der Ansprüche 1 bis 12 dadurch gekennzeichnet, daß der hintere Rand (81) des Zwischenstücks (27) zumindest in seinem Oberteil und zumindest in dem Bereich (95) über dem die Schneidwerkzeuge (4) während ihrer Drehung umlaufen, eine größere Materialdicke aufweist.

14. Mähmaschine nach zumindest einem der Ansprüche 1 bis 13, dadurch gekennzeichnet, daß der Lagergehäuse (26) einen Lagerzylinder (53) umfaßt, der einen ersten Mantelbereich (75) mit einem gewissen Durchmesser, der mit einem Teil des entsprechenden rotierenden Schneidorgans (2, 4; 3, 4), z.B. einer Bohrung (77) zur Bildung eines Labyrinthes zusammenwirkt, und einen zweiten Mantelbereich (76) mit einem Durchmesser, der kleiner als der Durchmesser des ersten Mantelbereichs (75) ist, aufweist.

15. Mähmaschine nach Anspruch 14, dadurch gekennzeichnet, daß die Höhe des zweiten Mantelbereichs (76) relativ groß ist.

16. Mähmaschine nach einem der Ansprüche 14 oder 15, dadurch gekennzeichnet, daß die untere Fläche (78) des Schneidorgans (2, 4; 3, 4), die den ein Labyrinth mit dem ersten Bereich (75) des Lagerzylinders (53) bildenden Teil des Schneidorgans (2, 4; 3, 4) unten begrenzt, sich im wesentlichen in die Nähe der Grenze zwischen den Bereichen (75 und 76) des Lagerzylinders (53), vorzugsweise ein wenig darüber, erstreckt.

17. Mähmaschine nach Anspruch 16, dadurch gekennzeichnet, daß sich die untere Fläche (78) des Schneidorgans (2, 4; 3, 4) von der Nähe der Grenze zwischen den Bereichen (75 und 76) des Lagerzylinders (53) nach außen und nach oben erstreckt.

18. Mähmaschine nach zumindest einem der Ansprüche 1 bis 17, dadurch gekennzeichnet, daß die im Gehäuse (9) untergebrachten Übertragungsmittel (14, 34, 35) aus einer ein- oder mehrteiligen Übertragungswelle (14) und einem Zahnradpaar (34, 35) pro rotierendem Schneidorgan (2, 4; 3, 4) z.B. einem Kegelzahnradpaar bestehen, des die Bewegung der Übertragungswelle (14) auf die Welle (52) des rotierenden Schneidorgans (2, 4; 3, 4) überträgt.

19. Mähmaschine nach zumindest einem der Ansprüche 1 bis 18, dadurch gekennzeichnet, daß die Welle (52) eines rotierenden Schneidorgans (2, 4; 3, 4) in einem Lager (54) geführt ist, das in der Bohrung eines Lagerzylinders (53) untergebracht ist, mit dem das das rotierende Schneidorgan (2, 4; 3, 4) tragende Lagergehäuse (26) ausgestattet ist, wobei der kleinste Durchmesser der Bohrung des Lagerzylinders (53) größer als der Außendurchmesser des auf der Welle (52) fixierten Übertragungsmittels (35) ist, sodaß die vorher zusammengebaute Einheit: Welle (52)—Übertragungsmittel (35)—Lager (54), in die Borhung des Lagerzylinders (53) eingebaut und aus der Bohrung ausgebaut werden kann.

20. Mähmaschine nach Anspruch 19, dadurch gekennzeichnet, daß die Lager (54) demontierbar ist.

21. Mähmaschine nach einem der Ansprüche 19 oder 20, dadurch gekennzeichnet, daß das Lager (54) eine Lagerbüchse (55) und zumindest ein Wälzlager (56) umfaßt.

22. Mähmaschine nach Anspruch 21, dadurch gekennzeichnet, daß das oder die Wälzlager (56) in die Lagerbüchse (55) nicht lösbar eingebaut ist (sind).

23. Mähmaschine nach Anspruch 22, dadurch gekennzeichnet, daß das oder die Wälzlager (56) in der Lagerbüchse (55) durch zumindest eine Schulter (65) gehalten sind, die durch Deformation der Lagerbüchse (55) erhalten wird.

24. Mähmaschine nach zumindest einem der Ansprüche 19 bis 23, dadurch gekennzeichnet, daß die Einheit Mittel (58, 60; 121, 122, 123) umfasst, die eine im wesentlichen kontinuierliche Regelung des Funktionsspiels der Übertragungsmittel (34, 35), z.B. eines Kegelzahnradpaares, ermöglichen.

25. Mähmaschine nach Anspruch 24, dadurch gekennzeichnet, daß die Mittel, die die Regelung des Funktionsspiels der Übertragungsmittl (34, 35) ermöglichen, aus zumindest einem Organ (123) bestehen, das man beim Einbau des Lagers (54) in den Lagerzylinder (53) deformiert.

26. Mähmaschine nach zumindest einem der Ansprüche 19 bis 24, dadurch gekennzeichnet, daß das Lager (54) an seiner Außenfläche zumindest einen Teil (60) umfaßt, der mit einem Gewinde versehen ist und mit einem Gewindeteil (58) der Bohrung des Lagerzylinders (53) zusammenwirkt.

27. Mähmaschine nach Anspruch 26, dadurch gekennzeichnet, daß das Gewinde ein Feingewinde ist.

28. Mähmaschine nach Anspruch 26 oder 27, dadurch gekennzeichnet, daß die Außenfläche des Lagers (54) einen gewindelosen Teil (59) aufweist, der sich in einem gewindelosen Teil (57) des Lagerzylinders (53) zentriert.

29. Mähmaschine nach Anspruch 28, dadurch gekennzeichnet, daß die gewindelosen Teile (59, 57) des Lagers (54) und des Lagerzylinders (53) zusammenwirken, bevor die Gewindeteile (60, 58) des Lagers (54) und des Lagerzylinders (53) beginnen zusammenwirken.

30. Mähmaschine nach zumindest einem der Ansprüche 26 bis 29, dadurch gekennzeichnet, daß der Gewindeteil (58) des Lagerzylinders (53) und der Gewindeteil (60) des Lagers (54) miteinander nicht in Eingriff gebracht werden können, wenn die Übertragungsmittel, z.B. das Zahnradpaar (34, 35) nicht in kraftschlüssiger Verbindung sind.

31. Mähmaschine nach zumindest einem der Ansprüche 26 bis 30, dadurch gekennzeichnet, daß nach Einbau des Lagers (54) in den Lagerzylinder (53) Mittel (61, 62) eine Relativdrehung des Lagers (54) gegenüber dem Lagerzylinder (53) verhindern.

32. Mähmaschine nach Anspruch 31, dadurch gekennzeichnet, daß die Mittel (61, 62), die die Relativdrehung des Lagers (54) gegenüber dem Lagerzylinder (53) verhindern, aus zumindest einem Organ (61) des Lagers (54) bestehen, das mit einem Organ (62) des Lagerzylinders (53) zusammenwirkt.

33. Mähmaschine nach Anspruch 32, dadurch gekennzeichnet, daß die Organe (61, 62) des Lagers (54) und des Lagerzylinders (53) die die Relativdrehung des Lagers (54) gegenüber dem Lagerzylinder (53) verbindern müssen, in Wirkverbindung durch Deformation des einen und/oder anderen Organs (61, 62) angebracht werden.

34. Mähmaschine nach Anspruch 33, dadurch gekennzeichnet, daß das Lager (54) einen relativ dünnwandigen zylindrischen Ring (61) und der Lagerzylinder (53) zumindest eine Nut (62) aufweisen und daß die Verhinderung der Relativdrehung des Lagers (54) gegenüber dem Lagerzylinder (53) erreicht wird, indem die Stelle des zylindrischen Rings (61) deformiert wird, die sich in der Nähe der Nut (62) befindet, damit sie in die Nut (62) eindringt.

35. Mähmaschine nach zumindest einem der Ansprüche 26 bis 34, dadurch gekennzeichnet, daß das Lager (54) mit An- bzw. Eingriffsmitteln (74, 129) versehen ist, die sein Hinein- oder Herausschrauben ermöglichen.

36. Mähmaschine nach Anspruch 35, dadurch gekennzeichnet, daß die An- bzw. Eingriffsmittel aus zumindest einer Vertiefung (74) bestehen, die in die obere Fläche des Lagers (54) eingearbeitet ist.

37. Mähmaschine nach Anspruch 35, dadurch gekennzeichnet, daß die An- bzw. Eingriffsmittel aus einem zentralen Teil (129) bestehen, der aus der oberen Fläche des Lagers (54) herausragt und eine nicht kreisrunde Außenfläche hat.

38. Mähmaschine nach zumindest einem der Ansprüche 19 bis 37, dadurch gekenneichnet, daß Dichtungsmittel Schmiermittelverluste zwischen Lager (54) und Lagerzylinder (53) verhindern.

**Claims**

1. A mower comprising rotary cutting elements (2, 4; 3, 4) which extend above a housing (9) and are provided with at least one cutting tool (4), where the trajectories (84, 85) of said cutting elements (2, 4; 3, 4) are intersecting and at least one part of said rotary cutting elements (2, 4; 3, 4) are driven by transmission means (106, 14, 34, 35, 52) located in the housing (9) which comprises casing (26) in which said part of said rotary cutting elements (2, 4; 3, 4) are guided in rotation, and bracing elements (27), each one of which determining the distance between two adjacent casings (26), where said casing (26) and said bracing elements (27) extend at least substantially in line one after the other in the longitudinal direction of the housing (9) and are connected to one another by assembly elements (29) which extend at least substantially in parallel to the longitudinal direction of the housing (9) and, viewed from above, at least substantially beneath the rotary cutting elements (2, 4; 3, 4), one part of said assembly elements (29) extending at the front side of the housing (9) and one part of said assembly elements (29) extending at the rear side of the said housing (9), characterised in that the housing (9) comprises modules (10), each of which is formed by one single casing (26) and one single bracing element (27) in one single piece, where said bracing element (27) is located in one and the same side of the corresponding casing (26) that each module (10) is provided at each of its ends with a flange (30), and that the assembly elements (29) comprise a certain number of bolts (31, 33) which are associated with a pair of adjacent modules (10), the said bolts (31, 33) passing exclusively through the adjacent flanges (30) of the said pair of adjacent modules (10).

2. A mower as claimed in Claim 1, characterised in that the bracing element (27) of a module (10) extends, viewed in the direction of work (6), on the left of the casing (26) which forms part of the same module (10).

3. A mower as claimed in one of the Claims 1 or 2, characterised in that the casing (26) comprises a bearing cylinder (53) with an axis (79) directed upwards and that said bearing cylinder (53) forms an integral part of the module (10).

4. A mower as claimed in at least one of the Claims 1 to 3, characterised in that the axis (79) of the bearing cylinder (53) of the casing (26) is located close to the front edge (80) of the module (10).

5. A mower as claimed in at least one of the Claims 1 to 4, characterised in that two adjacent modules (10) are centred in relation to one another.

6. A mower as claimed in Claim 5, characterised in that two adjacent modules (10) are centered in relation to one another by means of a supplementary element (28).

7. A mower as claimed in at least one of the Claims 1 to 6, characterised in that during work at least one part of the lower face (90) of the bracing element (27) is located at a certain distance (91) from the ground (92).

8. A mower as claimed in at least one of the Claims 1 to 7, characterised in that the front edge (80) of the bracing element (27) is relatively pointed in at least one part of its length.

9. A mower as claimed in at least one part of the Claims 1 to 8, characterised in that in at least one part of its length the front edge (80) of the bracing element (27) exhibits an oblique plane (93) directed rearwards and downwards.

10. A mower as claimed in at least one of the Claims 1 to 9, characterised in that at least in the zone (89) above which the cutting tools (4) pass during their rotation, the front edge (80) of the bracing element (27) exhibits an oblique plane (94) directed rearwards and upwards.

11. A mower as claimed in at least one of the Claims 1 to 10, characterised in that at least in its upper part and at least in the zone (89) above which the cutting tools (4) pass during their rotation, the front edge (80) of the bracing element (27) exhibits a greater material thickness.

12. A mower as claimed in at least one of the Claims 1 to 11, characterised in that at least in the zone (95) above which the cutting tools (4) pass during their rotation, the rear edge (81) of the bracing element (27) exhibits an oblique plane (96) directed forwards and upwards.

13. A mower as claimed in at least one of the Claims 1 to 12, characterised in that at least in its upper part and at least in the zone (95) above which the cutting tools (4) pass during their rotation, the rear edge (81) of the bracing element (27) exhibits a greater material thickness.

14. A mower as claimed in at least one of the Claims 1 to 13, characterised in that the casing (26) comprises a bearing cylinder (53) which exhibits a first zone of revolution (75) of a certain diameter which collaborates with a portion of the corresponding rotary cutting elements (2, 4; 3, 4), such as a bore (77) for example, so as to form a baffle, and exhibits a second zone of revolution (76) which has a smaller diameter than the diameter of the first zone of revolution (75).

15. A mower as claimed in Claim 14, characterised in that the length of the second zone of revolution (76) is relatively great.

16. A mower as claimed in one of the Claims 14 or 15, characterised in that the lower surface (78) of the cutting element (2, 4; 3, 4) which delimits the bottom of that portion of the cutting element (2, 4; 3, 4) which forms a baffle with the first zone (75) of the bearing cylinder (53), extends substantially in the vicinity of the boundary between the zones (75 and 76) of the bearing cylinder (53) and preferably slightly higher than said boundary.

17. A mower as claimed in Claim 16, characterised in that the lower surface (78) of the cutting element (2, 4; 3, 4) extends outwards and upwards from the vicinity of the boundary between the zones (75 and 76) of the bearing cylinder (53).

18. A mower as claimed in at least one of the Claims 1 to 17, characterised in that the transmission means (14, 34, 35) located in the housing (9) are formed by a transmission shaft (14) in one piece or several pieces and by a pair of gear wheels (34, 35) in respect of each rotary cutting element (2, 4; 3, 4) which transmit the movement of the transmission shaft (14) to the shaft (52) of the rotary cutting element (2, 4; 3, 4) such as a pair of bevel gears for example.

19. A mower as claimed in at least one of the Claims 1 to 18, characterised in that the shaft (52) of a rotary cutting element (2, 4; 3, 4) is guided in a journal bearing (54) located in the bore of a bearing cylinder (53) with which the casing (26) which supports said rotary cutting element (2, 4; 3, 4) is provided, the smallest diameter of the bore of the bearing cylinder (53) being greater than the external diameter of the transmission means (35) attached to the shaft (52), in such manner that the preassembled unit comprising shaft (52)—transmission means (35)—bearing (54) can be mounted in the bore of the bearing cylinder (53) and removed from said bore.

20. A mower as claimed in Claim 19, characterised in that the journal bearing (54) is removable.

21. A mower as claimed in one of the Claims 19 or 20, characterised in that the journal bearing (54) comprises a bearing box (55) and at least one bearing (56).

22. A mower as claimed in Claim 21, characterised in that the bearing(s) (56) is/are mounted in the bearing box (55) in a non-removable manner.

23. A mower as claimed in Claim 22, characterised in that the bearing(s) (56) is/are maintained in the bearing box (55) by at least one shoulder (65) formed by the deformation of the bearing box (55).

24. A mower as claimed in at least one of the Claims 19 to 23, characterised in that the asssembly comprises means (58, 60; 121, 122, 123) which permit a substantially continuous adjustment of the operating play of the transmission means (34, 35), such as a pair of bevel gears.

25. A mower as claimed in Claim 24, characterised in that the means which permit the adjustment of the operating play of the transmission means (34, 35) are formed by at least one element (123) which is deformed during the mounting of the journal bearing (54) in the bearing cylinder (53).

26. A mower as claimed in at least one of the Claims 19 to 24, characterised in that on its outer surface the journal bearing (54) comprises at least one part (60) which is threaded and which cooperates with a threaded part (58) of the bore of the bearing cylinder (53).

27. A mower as claimed in Claim 26, characterised in that the pitch of the threading is fine.

28. A mower as claimed in Claim 26 or 27, characterised in that the outer surface of the journal bearing (54) comprises a non-threaded part (59) which is centred in a non-threaded part (57) of the bearing cylinder (53).

29. A mower as claimed in Claim 28, characterised in that the non-threaded part (59, 57) of the journal bearing (54) and of the bearing cylinder (53) cooperate before the threaded parts (60, 58) of said journal bearing (54) and of said bearing cylinder (53) commence their engagement.

30. A mower as claimed in at least one of the Claims 26 to 29, characterised in that the threaded part (58) of the bearing cylinder (53) and the threaded part (60) of the journal bearing (54) cannot be brought into engagement with one another when the transmission means, such as the pair of gear wheels (34, 35) for example, are not in engagement.

31. A mower as claimed in at least one of the Claims 26 to 30, characterised in that when the journal bearing (54) has been mounted in the bearing cylinder (53), means (61, 62) block the relative rotation between said journal bearing (54) and said bearing cylinder (53).

32. A mower as claimed in Claim 31, characterised in that the means (61, 62) which block the relative rotation between the journal bearing (54) and the bearing cylinder (53) are formed by at least one element (62) of the journal bearing (54) which cooperates with an element (62) of the bearing cylinder (53).

33. A mower as claimed in Claim 32, characterised in that the elements (61, 62) of the journal bearing (54) and of the bearing cylinder (53) which must block the relative rotation of the journal bearing (54) in respect to the bearing cylinder (53) are caused to cooperate by the deformation of one and/or the other of the elements (61, 62).

34. A mower as claimed in Claim 33, characterised in that the journal bearing (54) comprises a cylindrical collar (61) with relatively thin wall and the bearing cylinder (53) is provided with at least one notch (62) and that the blocking of the relative rotation between the journal bearing (54) and the bearing cylinder (53) is achieved by deforming that point of the cylindrical collar (61) which is located in the vicinity of the notch (62) in order that it may penetrate into said notch (62).

35. A mower as claimed in at least one of the Claims 26 to 34, characterised in that the journal bearing (54) is provided with grabbing means (74, 129) with the assistance of which it can be screwed or unscrewed.

36. A mower as claimed in Claim 35, characterised in that the grabbing means are formed by at least one recess (74) formed in the upper surface of the journal bearing (54).

37. A mower as claimed in Claim 35, characterised in that the grabbing means are formed by a central part (129) which emerges at the upper surface of the journal bearing (54) and which has a non-circular outer surface.

38. A mower as claimed in at least one of the Claims 19 to 37, characterised in that sealing means prevent leakages of lubricant between the journal bearing (54) and the bearing cylinder (53).

FIG.1

EP 0 171 341 B1

FIG.2

FIG.3

FIG.4

FIG.5

FIG. 6

FIG. 7

FIG. 8

FIG. 9